# FASCICULE DE BREVET EUROPEEN

(11) **EP 1 195 119 B1**
(45) Date de publication et mention de la délivrance du brevet: **08.09.2004**
(21) Numéro de dépôt: 01402557.1
(22) Date de dépôt: 03.10.2001
(51) Int. Cl.: A47J 27/14

(54) **Procédé de stockage et de préparation de produits alimentaires pour leur distribution sous forme de produits finis, consommables, et installation en résultant**
Verfahren zum Lagern und Vorbereiten von Nahrungsmitteln für ihre Ausgabe als verzehrbare Endprodukte und daraus folgende Anlage
Process for storing and preparing food products for their delivery as consumable final products and installation thereof

(30) Priorité: 06.10.2000 FR 0012830
(43) Date de publication de la demande: 10.04.2002
(73) Titulaire: USINOR, 92800 Puteaux (FR); Tesniere, François, 75011 Paris (FR)
(72) Inventeur: Tesniere, François, 75011 Paris (FR)
(74) Mandataire: Bouget, Lucien

(56) Documents cités:
- US-A- 4 751 368
- US-A- 5 590 586
- US-A- 6 119 587

## Description

L'invention concerne un procédé et une installation de préparation de produits alimentaires pour leur distribution sous forme de produits finis consommables. L'invention concerne en particulier la conception de cuisines professionnelles pour la préparation de repas ou de plats cuisinés distribués dans le cadre d'une restauration collective ou vendus dans un magasin d'alimentation.

Les produits finis peuvent être consommés sur place, dans un espace de restauration attenant à la cuisine professionnelle, par exemple dans le cas des cantines scolaires, restaurants d'entreprises ou restaurants de magasins grandes surfaces, ou encore transportés entre le lieu de préparation et un lieu de consommation quelconque, par exemple dans le cas de repas servis dans un moyen de transport collectif, de repas livrés à domicile ou de plats cuisinés destinés à la vente dans des magasins d'alimentation.

Les produits finis peuvent être distribués dans un état propre à une consommation immédiate ou sous une forme assurant leur conservation pendant un stockage ou un transport, par exemple sous forme surgelée.

Les cuisines professionnelles dans lesquelles on effectue la transformation de produits alimentaires bruts en produits consommables sous la forme de plats ou de parts individuelles qui sont distribués par exemple dans le cadre de la restauration et en particulier dans le cadre de la restauration collective doivent répondre à des exigences de plus en plus sévères en matière d'hygiène, de productivité et d'ergonomie des tâches effectuées par le personnel affecté à la préparation des repas.

Une des difficultés d'organisation des cuisines professionnelles est due au fait que les produits alimentaires distribués dans le cadre d'une restauration collective constituant le menu peuvent être de types très différents quant à leur nature et quant au traitement nécessaire pour leur transformation en produits finis consommables.

Pour tenter de répondre à ces besoins, on a conçu et réalisé jusqu'ici différents types de cuisine professionnelle pour la préparation de repas distribués dans des espaces de restauration collective.

On a par exemple proposé des cuisines ouvertes de type paysager qui comportent un seul local polyfonctionnel de très grande taille dans lequel on réalise l'ensemble des opérations nécessaires à la préparation des différents produits consommables constituant le menu. L'inconvénient d'un tel type de cuisine est que les opérations sur des produits bruts, en particulier les légumes non épluchés et non lavés, les poissons et les produits contenus dans des emballages d'origines très diverses, sont réalisées dans un même local que les opérations effectuées sur les produits fragilisés ayant subi un prétraitement d'épluchage, de lavage ou de déconditionnement. En outre, l'ensemble des opérations sur tous les types de produit est réalisé dans un local à une température non conditionnée, ce qui peut être inapproprié pour certaines préparations. Il est donc impossible, dans de telles cuisines paysagères, de respecter une hygiène même rudimentaire, du fait de la proximité des différents postes de travail et des échanges entre ces postes de travail. Enfin, les postes de travail ne peuvent être organisés d'une manière rationnelle avec de bonnes conditions d'ergonomie.

On a donc édicté certaines règles, pour la conception et la réalisation des cuisines professionnelles, de manière à obtenir de meilleures conditions d'hygiène dans la préparation des repas. L'une de ces règles, désignée généralement sous l'appellation "marche en avant", consiste à imposer une gestion des circuits des produits à l'intérieur de la cuisine professionnelle, de telle manière que les parcours effectués, dans un seul sens, par les produits propres et les produits sales ne puissent se croiser. Pour répondre à ce principe, on a conçu des cuisines professionnelles de type fermé comportant un ensemble d'espaces monofonctionnels séparés les uns des autres. De tels espaces monofonctionnels comportent par exemple un local trancheur, un local de déboîtage, un local de conditionnement, un local de légumerie et différents locaux de cuisson et de préparations diverses. Cette conception conduit à la réalisation de cuisines fragmentées surdimensionnées et en conséquence a des coûts d'investissement et d'exploitation prohibitifs. Par exemple, dans une telle cuisine professionnelle, pour passer d'un local de traitement de produits bruts à un local de traitement de produits fragilisés ou cuisinés, il peut être nécessaire de prévoir deux couloirs (un couloir propre à l'aller et un couloir sale au retour), si bien que les espaces de circulation occupent une surface très importante. Dans certaines cuisines, les espaces de circulation peuvent dépasser 30 % de la surface totale de la cuisine.

De plus, les cuisines centrales conçues suivant le type fermé et cloisonné nécessitent des modes d'emploi et des règlements extrêmement complexes pour imposer certaines circulations et pour interdire d'autres circulations, le plan de circulation à l'intérieur de la cuisine pouvant être variable au cours du temps. Il en résulte des modes d'emploi extrêmement complexes qui peuvent comporter plusieurs centaines de pages.

Enfin, il est nécessaire d'utiliser des matériels de transport des produits à l'intérieur de la cuisine tels que des chariots qui rendent difficile le respect de bonnes conditions d'hygiène. Il peut être nécessaire d'effectuer de nombreux nettoyages de ces matériels de transport, ce qui complique la tâche du personnel affecté à la cuisine. De manière générale, les cuisines professionnelles conçues et réalisées jusqu'ici nécessitent des opérations de nettoyage et d'entretien lourdes et coûteuses, principalement du fait qu'elles sont installées à l'intérieur de bâtiments qui, dans certains cas, ne sont pas conçus pour répondre aux besoins fonctionnels de la cuisine professionnelle. Les éléments de structure de ces bâtiments tels que des faux plafonds, des sols ou des cloisons ne sont pas toujours réalisés de manière à faciliter le nettoyage et le respect d'une très bonne hygiène.

On ne connaissait pas jusqu'ici de procédé de préparation de produits alimentaires destinés à être distribués par exemple dans le cadre d'une restauration collective qui permette d'obtenir des conditions d'hygiène parfaite dans la préparation des produits, de très bonnes conditions d'ergonomie quant au travail du personnel affecté aux tâches de préparation des produits et une conception d'installation qui, à performances égales ou supérieures quant au nombre et à la qualité des repas préparés, permette une réduction de la surface au sol et de l'encombrement général de la cuisine professionnelle et des coûts d'investissement et d'exploitation.

Le but de l'invention est donc de proposer un procédé de préparation de produits alimentaires de plusieurs types, différents quant à leur nature et à leur préparation, et destinés à être distribués sous une forme consommable, consistant à traiter chacun des produits de chacun des types de produit pour le faire passer d'un état brut à un état fini propre à la consommation, ce procédé permettant d'obtenir des conditions d'hygiène parfaites, ainsi qu'une très bonne ergonomie des postes de travail pour la préparation des produits, tout en réduisant les coûts d'investissement et d'exploitation pour la mise en oeuvre du procédé.

Dans ce but, on fait passer les produits de chacun des types de produit par fractions successives correspondant à un nombre défini de parts distribuables, suivant au moins un parcours traversant au moins deux zones de travail et allant d'un espace de stockage de produits bruts à une zone de stockage et distribution de produits finis sous forme consommable, les zones de travail et de réception étant disposées en parallèle et totalement séparées les unes des autres par des moyens de stockage et de passage isolés des produits d'une zone à une zone voisine et des moyens d'accès isolés pour le personnel affecté à chacune des zones, les parcours des produits à travers les moyens de stockage et de passage étant sensiblement parallèles et sans recoupement et étant effectués dans un seul sens.

Afin de bien faire comprendre l'invention, on va maintenant décrire, à titre d'exemple, une cuisine professionnelle réalisée suivant l'invention et la mise en oeuvre du procédé selon l'invention pour la préparation de repas destinés à un espace de restauration collective.
La figure 1 est une vue en plan d'une cuisine professionnelle suivant l'invention.
La figure 2 est une vue schématique montrant l'organisation générale d'une cuisine professionnelle suivant l'invention.
La figure 3 est une vue schématique en élévation et en coupe longitudinale de la cuisine professionnelle suivant l'invention, dans la direction du parcours d'un produit alimentaire.
La figure 4 est une vue en perspective éclatée de l'ensemble des équipements constituant un module permettant la préparation et la distribution d'un produit alimentaire.
Les figures 5 et 6 sont des vues en perspective suivant deux côtés d'une partie de l'équipement ou borne du module représenté sur la figure 4.
Les figures 7, 8 et 9 sont des vues en perspective de zones de travail ou de distribution de la cuisine professionnelle suivant l'invention.
La figure 10 est une vue en coupe verticale longitudinale dans la direction de parcours d'un produit, d'un module de préparation du produit comportant une ventilation suivant une variante de réalisation.

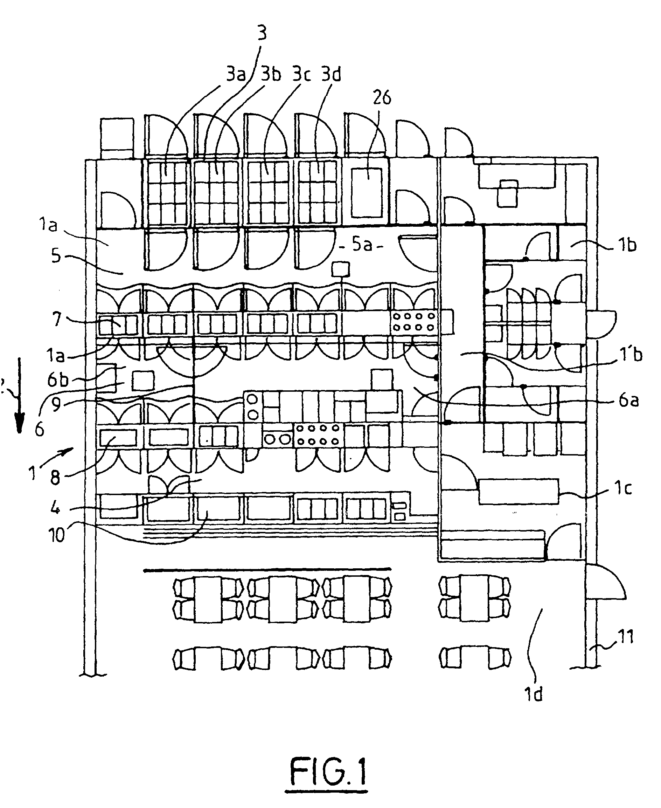

Sur la figure 1, on voit une vue en plan d'une cuisine professionnelle suivant l'invention permettant de réaliser la préparation d'une pluralité de produits consommables et la distribution des produits dans un espace de restauration.

La cuisine professionnelle représentée sur la figure 1 ne comporte que les éléments fonctionnels permettant de réaliser la préparation des différents plats constituant le menu, ces éléments fonctionnels représentés sur la figure 1 et l'espace de restauration pouvant être logés à l'intérieur d'un bâtiment dont l'architecture extérieure est totalement indépendante de la réalisation des éléments fonctionnels de la cuisine.

L'ensemble de la cuisine, par exemple de forme rectangulaire ou carrée, désigné de manière générale par le repère 1, comporte une partie fonctionnelle 1 a dans laquelle est réalisée la préparation des produits pour les mettre sous une forme consommable par une suite de transformations.

La cuisine professionnelle comporte de plus deux locaux 1b et 1c disposés latéralement par rapport à la partie 1a. Le local 1b est réservé au personnel et contient en particulier des vestiaires et des installations sanitaires permettant au personnel de la cuisine professionnelle d'échanger leur tenue de ville contre une tenue de travail à leur prise de service et, inversement, à la fin de leur service, leur tenue de travail contre leur tenue de ville et d'ef fectuer un nettoyage corporel permettant d'intervenir dans la cuisine professionnelle dans de parfaites conditions d'hygiène.

Le local 1c ou local de plonge est utilisé pour le lavage de la vaisselle utilisée par les consommateurs dans l'espace de restauration 1d.

L'espace 1a de préparation et de distribution des produits sous forme consommable s'étend dans une direction longitudinale représentée par la flèche 2 donnant la direction générale et le sens de circulation des produits dans l'espace de travail 1a.

L'espace de travail 1a s'étend de plus dans une direction transversale perpendiculaire à la direction donnée par la flèche 2, différentes lignes de préparation des produits étant disposées côte à côte dans la direction transversale.

Chacune des lignes de préparation des produits définit un parcours suivant lequel on déplace et on transforme les produits pour les faire passer d'un état brut à un état propre à la consommation dans l'espace de restauration 1d. Les parcours ou flux des produits peuvent être de type court, pour les produits non transformés tels que les fruits, les fromages, certains desserts, les boissons et le pain. Les flux de produits peuvent être des flux de longueur moyenne, ou flux moyens, pour les produits transformés sans traitement par la chaleur, tels que les crudités et la charcuterie ou encore les flux peuvent être longs pour les produits transformés avec traitement par la chaleur tels que les légumes cuits, les viandes et les poissons cuits.

Les lignes de préparation des produits ou flux ayant la direction donnée par la flèche 2 et juxtaposées dans une direction perpendiculaire à cette direction de circulation des produits ont toutes pour point de départ un espace initial 3 de stockage des produits bruts disposé à l'une des extrémités longitudinales de la cuisine professionnelle 1.

Les flux de produits aboutissent à une zone 4 de stockage et distribution de produits finis. Dans le cas de l'exemple décrit (cuisine attenante à un espace de restauration), la zone de stockage et distribution de produits finis est une zone de distribution des produits sous forme de self service, à l'intérieur de l'espace de restauration 1d.

Chacune des lignes de préparation d'un produit traverse deux zones de travail 5 et 6 disposées dans la direction transversale et sensiblement parallèles entre elles, la zone de distribution 4 étant également de direction transversale et parallèle aux zones de travail 5 et 6.

La première zone de travail 5, appelée zone de fragilisation, est une zone dans laquelle on réalise une première transformation des produits bruts prélevés dans l'espace de stockage 3, cette première transformation consistant en une fragilisation des produits bruts, par exemple épluchage et lavage de légumes prélevés à l'état brut dans l'espace de stockage 3 ou encore déballage et déconditionnement de produits emballés à température ambiante ou à basse température (produits frais ou surgelés).

Dans la seconde zone de travail 6, on réalise en particulier la cuisson ou le réchauffage à température ambiante des produits, la découpe et la mise en forme de parts consommables des différents produits.

Dans la zone de distribution 4, on réalise la mise à disposition des produits à l'état consommable dans des présentoirs comportant des moyens permettant en particulier de maintenir les produits à leur température de consommation.

Les zones de travail 5 et 6 sont accessibles au personnel affecté à la fragilisation et à la transformation des produits, à partir du local 1b dans lequel le personnel s'équipe d'une tenue de travail hygiénique adéquate.

La communication entre le local 1b du personnel et les zones de travail 5 et 6 est effectuée à travers un sas 1'b permettant de garantir une hygiène parfaite à l'intérieur des zones de travail 5 et 6. De manière générale, les locaux du personnel sont séparés de l'espace 1a par des moyens de traversée isolables.

Selon le principe de l'invention, les zones de travail 5 et 6 et la zone de distribution 4 sont disposées en parallèle et sont totalement séparées les unes des autres de telle manière qu'aucune pollution ou contamination ne peut se propager entre les zones contenant des produits bruts telles que la zone de fragilisation 5 et les zones contenant des produits semi-finis ou finis, c'est-à-dire dans un état consommable, telles que la zone de distribution 4.

Un des principes fondamentaux de l'invention consiste à réaliser les séparations entre elles des zones de travail et de la zone de distribution par des éléments fonctionnels appelés bornes renfermant les équipements utilisés dans les zones de travail ou de distribution adjacentes.

Une première borne 7 séparant la zone de fragilisation 5 de la zone de transformation 6 comporte les équipements nécessaires pour réaliser la pré-préparation des produits, à partir des produits bruts, par exemple, les matériels permettant l'épluchage, le déballage et le lavage des produits bruts.

Une seconde borne 8, séparant la zone de transformation 6 de la zone de distribution 4, renferme les équipements nécessaires pour réaliser le réchauffage ou la cuisson des produits fragilisés et lavés ainsi que la découpe et la réalisation de parts consommables des produits alimentaires.

Une borne d'extrémité délimitant la zone de fragilisation 5 est également constituée par l'espace de stockage 3 des produits bruts.

A l'intérieur de la zone de transformation 6, on peut également prévoir une cloison 9 séparant une partie 6a de la zone de transformation dans laquelle sont accessibles des moyens de cuisson ou de réchauffage de la borne 8 et une partie 6b dans laquelle la borne 8 ne comporte que des moyens de découpage et de conditionnement des parts consommables des produits ne subissant pas de cuisson ou de réchauffage.

On sépare ainsi la zone 6 en une partie chaude 6a et une partie froide 6b.

On obtient donc une séparation complète des zones dans lesquelles on traite des produits bruts (zone de fragilisation 5), des zones dans lesquelles on traite des produits fragilisés, soit à haute température, soit à température ordinaire ou à basse température.

Le lavage de la batterie de cuisine utilisée dans la zone de fragilisation 5 est effectué dans une partie 5a à l'extrémité de la zone de fragilisation 5, qui peut être partiellement cloisonnée pour la séparer de la zone fonctionnelle 5. Un vide-ordures 26 situé dans un local placé dans l'alignement des compartiments de l'espace de stockage 3 communique par une trappe obturable avec la partie 5a de la zone de fragilisation 5 et par une ouverture équipée d'une porte avec l'extérieur du bâtiment.

La zone de distribution 4 est délimitée par une borne 10 constituée par des présentoirs permettant la conservation des produits à leur température de consommation, cette température pouvant être une température supérieure à la température ordinaire ambiante pour les produits consommés chauds, la température ordinaire ou encore une basse température pour les produits frais ou réfrigérés. La zone de distribution 4, qui est une zone renfermant uniquement des produits finis, comporte donc plusieurs parties cloisonnées à des températures différentes.

Dans le cas d'une cuisine professionnelle destinée à la préparation de plats qui ne sont pas consommés sur place, une zone de stockage et distribution de produits finis est placée à l'extrémité du parcours de transformation des produits, dans une disposition analogue à la zone de distribution 4 de l'installation représentée. La zone de stockage et distribution de produits finis peut être une zone d'allotissement et d'expédition, une zone de stockage telle qu'une chambre froide ou un magasin ou tout autre espace permettant d'assurer une distribution immédiate ou différée des produits, dans un circuit quelconque.

Dans l'exemple de réalisation d'une cuisine professionnelle selon la figure 1, on a représenté quatre compartiments de stockage de produits bruts 3a, 3b, 3c et 3d qui sont de préférence des produits différents. Cependant, dans certains cas, on peut prévoir plusieurs espaces pour le stockage d'un produit en plus grande quantité.

Les espaces de stockage initiaux 3a, 3b, 3c et 3d comportent des portes permettant d'ouvrir ou de fermer une face d'extrémité longitudinale du compartiment de stockage initial, l'une des faces d'extrémité débouchant à l'extérieur de la cuisine professionnelle pour l'approvisionnement du compartiment de stockage en produits bruts et l'autre face communiquant avec la zone de fragilisation 5 pour permettre au personnel d'extraire les produits bruts par fractions successives, les produits bruts pouvant être déposés sur des bacs ou contenus dans des emballages.

Les compartiments de stockage 3a, 3b, 3c et 3d munis de portes à leurs extrémités longitudinales constituent un sas de séparation entre l'extérieur et l'intérieur de la cuisine professionnelle.

Dans le prolongement des compartiments de stockage initiaux 3a, 3b, 3c et 3d, ou dans des positions adjacentes, la borne 7 comporte des équipements permettant de réaliser la fragilisation des produits, par exemple, le déballage, l'épluchage et le lavage. La borne 7 comporte de plus un espace intérieur isolable permettant de constituer un sas de passage des produits bruts fragilisés entre la zone de fragilisation 5 et la zone de transformation 6 dans laquelle le personnel affecté à la transformation des produits prélève les produits bruts fragilisés. On obtient ainsi une séparation complète entre les zones de travail 5 et 6 avec un passage isolé des produits par l'intermédiaire d'un sas.

Dans le prolongement des équipements de la borne 7 affectés à la fragilisation, au stockage et au passage des produits fragilisés sont disposés, de manière adjacente dans la direction transversale de la borne 8, des équipements permettant de réaliser la transformation des produits, par exemple par cuisson ou réchauffage et/ou découpage, le stockage des produits transformés et le passage des produits transformés sous forme de parts consommables entre la zone de transformation 6 et la zone de distribution 4, la borne 8 comportant un sas de stockage et de passage des produits dans lequel le personnel affecté à la distribution prélève des parts voulues pour les placer dans les présentoirs de la borne 10.

Cette structure de la cuisine professionnelle 1 permet de réaliser une circulation des produits entre l'espace de stockage 3 des produits bruts et les présentoirs de la borne 10 de la zone de distribution, en substance, suivant la direction donnée par la flèche 2, de manière sensiblement rectiligne, chaque produit circulant dans un seul sens dans la direction fixe 2, l'ensemble des produits circulant donc en parallèle suivant la direction longitudinale de la cuisine 1.

La circulation des produits est réalisée dans un seul sens sans possibilité de retour avec un cloisonnement parfait entre les zones de travail 5 et 6 et avec la zone de distribution 4. Il est à remarquer que le cloisonnement entre les zones est réalisé sans utiliser de cloisons ou murs, la séparation entre les zones étant réalisée par des bornes incorporant des équipements fonctionnels.

Chacun des ensembles permettant la circulation et le traitement d'un produit et comportant, par exemple, un compartiment de stockage initial, tel que 3a, des équipements des bornes 7 et 8 et un présentoir de la borne 10 situés dans l'alignement du compartiment 3a, dans la direction longitudinale 2, ainsi que les espaces des zones de travail situées dans l'alignement longitudinal des équipements constitue un module de préparation d'un produit à l'état consommable.

La juxtaposition de modules dans la direction transversale de la cuisine professionnelle permet de traiter et de préparer l'ensemble des produits du menu distribués et consommés dans l'espace de restauration 1d.

Chacun des modules peut être affecté au traitement d'un produit particulier, la circulation ou flux du produit suivant la direction longitudinale du module permettant de réaliser la transformation du produit et la préparation de parts distribuables, le flux pouvant être court, moyen ou long, suivant le type de produit et la préparation nécessaire pour obtenir des parts distribuables. Plusieurs modules peuvent être affectés à un même produit pour augmenter les quantités de ce produit qui peuvent être distribuées dans l'espace de restauration, en fonction des besoins.

A l'intérieur des zones de travail 5 et 6, et en particulier à l'intérieur de la zone de cuisson et de découpage 6, les produits peuvent éventuellement passer d'un module à un autre, par exemple pour la réalisation de plats comportant plusieurs ingrédients en mélange. Cependant, la circulation des produits, en dehors de ces transferts dans une direction transversale, est globalement longitudinale dans la direction de la flèche 2, les produits traversant les bornes de séparation des zones de travail dans des directions parallèles.

Comme il est visible sur la figure 1, la réalisation de la cuisine professionnelle suivant l'invention est particulièrement compacte et, pour des performances identiques, en ce qui concerne le nombre de plats et de parts distribuables dont on effectue la préparation, la cuisine professionnelle suivant l'invention présente une surface au sol très inférieure à une cuisine selon une conception classique.

De plus, la séparation et l'isolation des zones de travail et de la zone de distribution permettent d'obtenir des conditions d'hygiène parfaites. La disposition en ligne des équipements et la circulation rectiligne des produits dans une seule direction et dans un seul sens permet d'autre part d'éviter tout recoupement entre les parcours de produits bruts et de produits fragilisés et d'obtenir des conditions d'ergonomie tout à fait satisfaisantes pour le personnel travaillant dans les zones de travail 5 et 6 et dans la zone de distribution 4. En effet, les déplacements du personnel sont limités au maximum, les produits étant prélevés sur un côté de la zone de travail et traités et évacués sur le côté opposé, à une distance correspondant à la largeur de la zone de travail. Les différents membres du personnel affectés aux tâches de préparation dans les zones de travail 5 et 6 ne sont pas susceptibles de se gêner dans leurs mouvements, du fait que chacun dispose d'un poste de travail parfaitement déterminé.

La cuisine professionnelle suivant l'invention peut être entourée par des murs d'un bâtiment tels que les murs 11 qui sont traversés par des ouvertures fermées par des portes permettant l'accès du personnel au local 1b, le remplissage des compartiments de l'espace de stockage 3 depuis l'extérieur du bâtiment et l'accès à l'espace de restauration 1d, pour la clientèle.

Il est à remarquer que l'ensemble du personnel pénètre dans les zones de travail 5 et 6, par l'intermédiaire d'un local permettant la mise en tenue et le nettoyage du personnel, avant qu'il ne pénètre dans un sas d'accès 1'b aux zones de travail et à la zone de distribution.

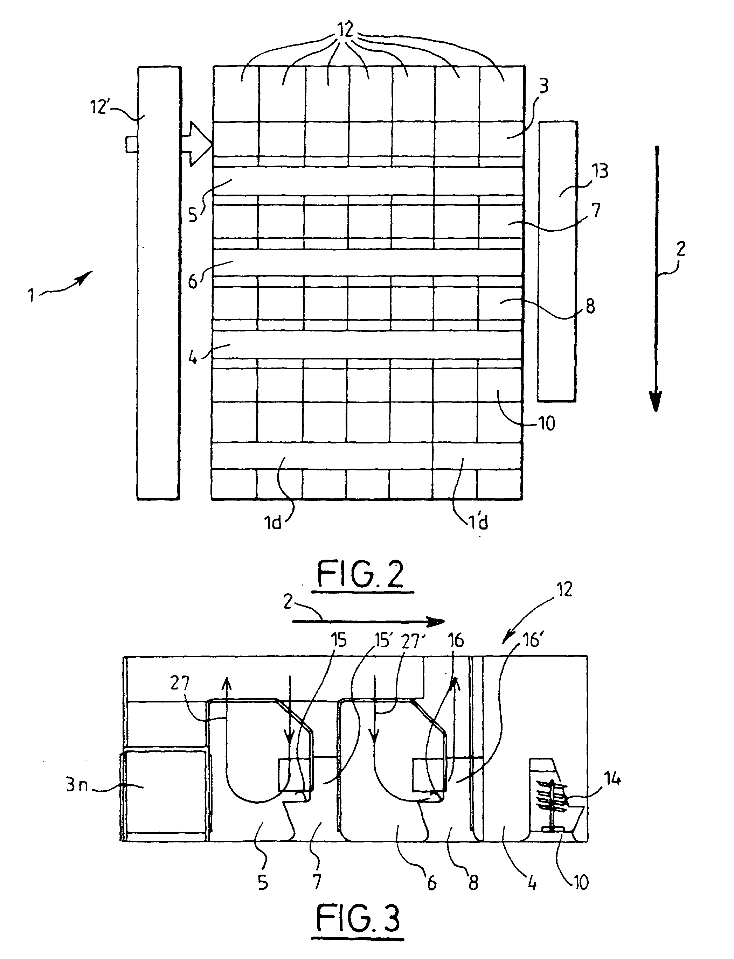

Sur la figure 2, on a représenté de manière schématique les différents éléments essentiels constituant une cuisine professionnelle 1 suivant l'invention, pour bien faire comprendre le principe d'organisation d'une telle cuisine. La cuisine professionnelle 1 est constituée par des modules juxtaposés 12 en nombre quelconque (par exemple sept modules dans le cas représenté sur la figure 2), la destination des modules étant définie en fonction des besoins de production et de distribution dans l'espace de restauration auquel est associée la cuisine 1.

Dans le cas où l'on désire faire évoluer la structure de la cuisine et augmenter par exemple sa capacité de production ou le nombre des plats du menu, on peut ajouter un module 12' dans une disposition adjacente par rapport aux modules 12 déjà en place.

Sur l'un des côtés longitudinaux de l'ensemble des modules juxtaposés 12, on place les locaux 13 du personnel.

Sur la figure 2, on a également représenté les zones de travail 5 (fragilisation et lavage des produits), 6 (transformation, par exemple, par cuisson des produits) et la zone de distribution 4 ainsi que l'espace de restauration 1 d dans lequel sont effectués la consommation des produits et éventuellement le lavage de la vaisselle utilisée par les consommateurs, dans une zone annexe 1'd.

Chacun des modules 12 comporte, successivement, dans la direction longitudinale 2, un compartiment de l'espace de stockage initial 3, un élément modulaire de la première borne 7, un élément modulaire de la seconde borne 8 et un présentoir de la troisième borne 10.

Les éléments modulaires des bornes 7 et 8 comportent des équipements nécessaires pour réaliser la fragilisation ou le lavage et la transformation des produits correspondants, par exemple des bacs de lavage, ainsi qu'un sas de stockage et de passage des produits entre la zone 5 de fragilisation et la zone 6 de transformation et entre la zone de transformation 6 et la zone de distribution 4, respectivement.

Chacun des modules 12 comporte de plus des parties des zones de travail 5 et 6 et de la zone de distribution 4 situées entre les compartiments ou éléments modulaires des bornes 3, 7, 8 et 10.

Chacun des produits circule suivant la direction longitudinale du module, dans un seul sens, en traversant successivement les deux zones de travail 5 et 6 et la zone de distribution 4, sans possibilité de retour.

Sur la figure 3, on a représenté de manière schématique, dans une coupe suivant la direction longitudinale 2, un module 12 comportant successivement dans la direction longitudinale 2 de la cuisine 1, un compartiment 3n de stockage initial d'un produit, la première zone de travail 5 ou zone de fragilisation et de lavage, la première borne 7, la seconde zone de travail 6 de transformation des produits, la seconde borne 8, la zone de distribution 4 et la troisième borne 10 comportant les présentoirs 14 des produits distribuables.

Chacune des bornes 7 et 8 comporte, à l'intérieur de la zone de travail adjacente 5 ou 6, des équipements 15 ou 16 permettant d'effectuer la pré-préparation ou la transformation des produits qui sont ensuite disposés dans un sas 15' ou 16' de stockage temporaire et de passage des produits d'une zone à la zone suivante.

Le personnel affecté à la pré-préparation des produits dans la zone de fragilisation et de lavage 5 prélève une fraction des produits dans le compartiment de stockage 3n, en ouvrant la porte du compartiment disposée du côté de la zone de fragilisation 5 et réalise, grâce aux équipements 15, la pré-préparation de la fraction de produits prélevés. Les produits de la fraction de produits prélevés, après fragilisation et lavage, sont disposés dans le sas de stockage temporaire 15'.

Les produits bruts peuvent être disposés à l'intérieur du compartiment de stockage initial 3n, dans des bacs ou dans des récipients, de telle sorte que la fraction prélevée, lors de chacune des interventions du personnel, corresponde à un nombre défini de parts distribuables du produit à l'état final.

Le personnel affecté à la transformation des produits, par exemple à la cuisson, à l'intérieur de la zone de transformation 6, prélève successivement les fractions de produits fragilisés et lavés disposés dans le sas de stockage 15' qui est accessible d'un côté de la zone de transformation 6. La transformation est effectuée grâce aux équipements 16, cette transformation pouvant comporter par exemple la cuisson et le découpage des produits ainsi que la réalisation et la présentation de parts consommables. Les parts consommables de la fraction prélevée et préparée sont disposées dans le sas de stockage temporaire et de passage 16'.

Le personnel chargé de la distribution dans le local de distribution 4 prélève successivement chacune des fractions de produit à l'état préparé final dans le sas de stockage et de passage 16' pour les disposer sur les présentoirs 14.

La circulation des produits entre les zones de travail successives et la zone de distribution est effectuée par l'intermédiaire de sas, de manière telle que les zones de travail et la zone de distribution sont totalement séparées.

De même, le personnel affecté aux différentes tâches à l'intérieur des zones de travail et de la zone de distribution ne peut avoir accès à ces zones de travail et de distribution que par l'intermédiaire du sas du local du personnel 13 dans lequel le personnel s'équipe d'une tenue hygiénique avant de pénétrer dans la zone de travail ou de distribution.

Une ventilation de chacune des zones de travail 5 et 6 est assurée de manière à éviter toute possibilité de contamination des zones de travail par des germes ou bactéries provenant d'une autre zone de travail ou de l'extérieur. Comme représenté par la flèche 27, la zone de fragilisation 5 est balayée par une circulation d'air, d'abord verticale et de haut en bas le long de la face d'entrée et des équipements de la borne 7, puis de bas en haut le long de la paroi de séparation de l'espace de stockage 3. L'air introduit dans la zone de fragilisation 5 par la partie supérieure de la borne 7 est filtré et conditionné en ce qui concerne sa température et son taux d'humidité.

Comme représenté par la flèche 27', la zone de transformation 6 est balayée par une circulation d'air d'abord verticale et de haut en bas, le long de la face de sortie de la borne 7, puis de bas en haut le long des équipements et de la face d'entrée de la borne 8. L'air introduit dans la zone de transformation 6 par la partie supérieure de la borne 7 est également filtré et conditionné en ce qui concerne sa température et son taux d'humidité.

L'air insufflé peut provenir de l'extérieur du bâtiment ou d'un circuit de recyclage. L'introduction d'air frais dans les zones de travail 5 et 6 depuis la partie supérieure de la borne 7 et/ou l'extraction de l'air de balayage à la partie supérieure de la paroi de la zone de stockage et de la borne 8 sont réalisées de manière que la pression P₁ dans la zone de fragilisation 5 soit supérieure à la pression P₀ dans l'espace de stockage 3 et que la pression P₂ dans la zone de transformation 6 soit supérieure à la pression P₁ de la zone de fragilisation 5. La pression P₀ ou P'₀ dans la zone de réception 4 des produits qui peut être la pression atmosphérique à l'extérieur du bâtiment est inférieure à la pression P₂ de la zone de transformation 6.

De cette manière, de l'air extérieur souillé ne peut pénétrer dans une zone quelconque de la cuisine et l'air de la zone de fragilisation 5 recevant les produits bruts ne peut pénétrer dans la zone 6 de préparation des produits finis.

De manière générale, dans le cas d'une installation comportant au moins deux zones de travail successives, une circulation d'air verticale de haut en bas puis de bas en haut contre une première face, puis contre une seconde face d'équipements ou de parois délimitant les zones de travail, de manière à créer une légère surpression dans la seconde zone de travail par rapport à la première, permet d'éviter tout passage d'air ou de gaz éventuellement chargés d'impuretés de la première vers la seconde zone par un effet de rideau d'air et de surpression. Une légère surpression des zones de travail par rapport à l'espace de stockage initial et par rapport à la zone de stockage et distribution de produits finis permet d'éviter toute possibilité de contamination des espaces de travail de la cuisine professionnelle.

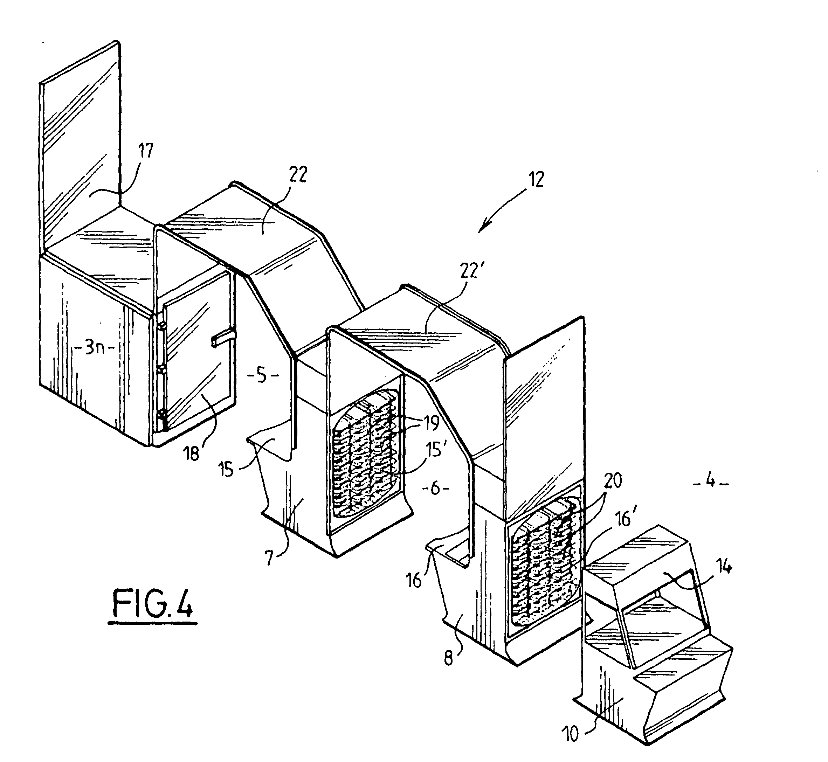

Sur la figure 4, on a représenté un module analogue au module représenté sur la figure 3, dans une vue en perspective montrant la réalisation matérielle du module.

A l'une des extrémités du module, le compartiment 3n de stockage des produits bruts peut être constitué par une armoire qui peut être réfrigérée et qui est accessible par des ouvertures qui peuvent être fermées par des portes sur ses deux faces d'extrémité longitudinales. Une première face d'extrémité longitudinale du compartiment de stockage 3n, à l'extrémité longitudinale du module 12, peut être disposée suivant une paroi d'extrémité longitudinale 17 de la cuisine séparant celle-ci de l'espace extérieur. On peut ainsi réaliser l'approvisionnement du compartiment de stockage 3n en produits bruts par l'extérieur de la cuisine.

La face d'extrémité longitudinale opposée du compartiment de stockage 3n comporte une ouverture qui peut être fermée par une porte 18 et constitue une première face d'extrémité de la zone de pré-préparation 5 des produits, le compartiment 3n étant accessible depuis la zone de pré-préparation 5 par ouverture de la porte 18 par le personnel affecté à la zone 5.

Chacune des fractions de produits prélevés dans le compartiment 3n est traitée par le personnel en utilisant l'équipement 15 puis introduite dans le sas 15' sous la forme de bacs ou conteneurs 19 renfermant chacun une fraction des produits pré-préparés, c'est-à-dire fragilisés et lavés par le personnel affecté à ces tâches dans la zone 5.

Le sas 15' renfermant les produits fragilisés et lavés est accessible depuis la zone de transformation 6 des produits pour le personnel affecté à ces tâches qui prélève successivement les fractions de produits déposées dans les bacs ou conteneurs 19, pour réaliser leur transformation par exemple par cuisson et découpage grâce à l'équipement 16 de la borne 8. Les produits transformés, par exemple cuits et découpés, sont disposés dans les bacs ou dans des conteneurs 20 qui peuvent être constitués par les bacs ou conteneurs 19 ou par d'autres plateaux ou conteneurs, puis rangés dans le sas 16' de stockage et de passage de la borne 8.

Le personnel chargé de la distribution à l'intérieur de l'espace de distribution 4 place les bacs ou conteneurs 16', à la demande, dans les présentoirs 14 qui peuvent être maintenus en température, par exemple réfrigérés ou chauffés.

Comme il est visible sur la figure 4, les zones de travail 5 et 6 qui sont délimitées à leurs extrémités longitudinales par le compartiment de stockage 3n et les bornes 7 et 8 respectivement sont délimitées à leur partie supérieure par un plafond constitué par une simple paroi 22, 22', dont la forme est adaptée aux tâches effectuées à l'intérieur de la zone de travail correspondante.

Les zones de travail 5, 6 sont délimitées, à l'avant et à l'arrière dans le sens de circulation des produits, par les bornes 7, 8 de chacun des modules accolées dans une direction transversale de l'installation, à leur partie supérieure, par les plafonds 22, 22' et, à leur partie inférieure, par le sol de l'installation, ces éléments assurant à eux seuls le cloisonnement des zones de travail.

De préférence, l'ensemble des modules et des parois supérieures 22 et 22' des zones de travail 5 et 6 est réalisé à partir de tôles en acier inoxydable qui permettent de faciliter le nettoyage des zones de travail et de la zone de distribution et d'obtenir des conditions parfaites d'hygiène.

On peut utiliser par exemple, pour réaliser les parois des bornes et des zones de travail, des tôles en acier inoxydable austénitique de type 304, 304L, 316 ou 316L, par exemple un acier Uginox 18.8 ou 18.10 contenant de 16 à 25 % de chrome et 8 à 25 % de nickel ou encore un acier ferritique F17 contenant jusqu'à 29 % de chrome.

En conformité avec l'arrêté relatif aux matériaux et objets inoxydables au contact de denrées alimentaires, l'acier inoxydable devra contenir au minimum 13 % de chrome. La teneur maximale en tantale, niobium et zirconium ne doit pas excéder 1 %. La teneur maximale en molybdène, titane, aluminium et cuivre ne doit pas excéder 4 %.

Les sols et les murs latéraux des zones de travail et de distribution peuvent être constitués d'un matériau revêtu de PVC thermosoudé, bactériostatique et fongistatique qui est à la fois antidérapant et lisse au toucher et donc nettoyable. Un tel matériau, pour être rendu antidérapant, contient des particules de quartz pénétrant dans la masse du matériau, lorsqu'il est comprimé par la chaussure d'un usager marchant sur le sol du local.

Toutes les alimentations (électrique, alimentation en eau ou autres) sont réalisées par des réseaux depuis un espace intérieur des compartiments de stockage et des bornes reposant sur le sol de la cuisine. Il n'existe donc aucun circuit apparent à l'intérieur de la cuisine.

Pour des questions d'hygiène, on peut également concevoir toutes les portes sans poignée de porte et les interrupteurs sans partie en saillie par rapport à la paroi sur laquelle ils sont fixés et implantés hors zone de production.

On prévoit, en plus d'un éclairage d'ambiance, un éclairage diffus des zones de travail permettant d'éviter toute projection d'ombre sur le plan de travail. Le personnel peut donc travailler dans des conditions à la fois reposante et sûre sans éclairage violent et contrasté.

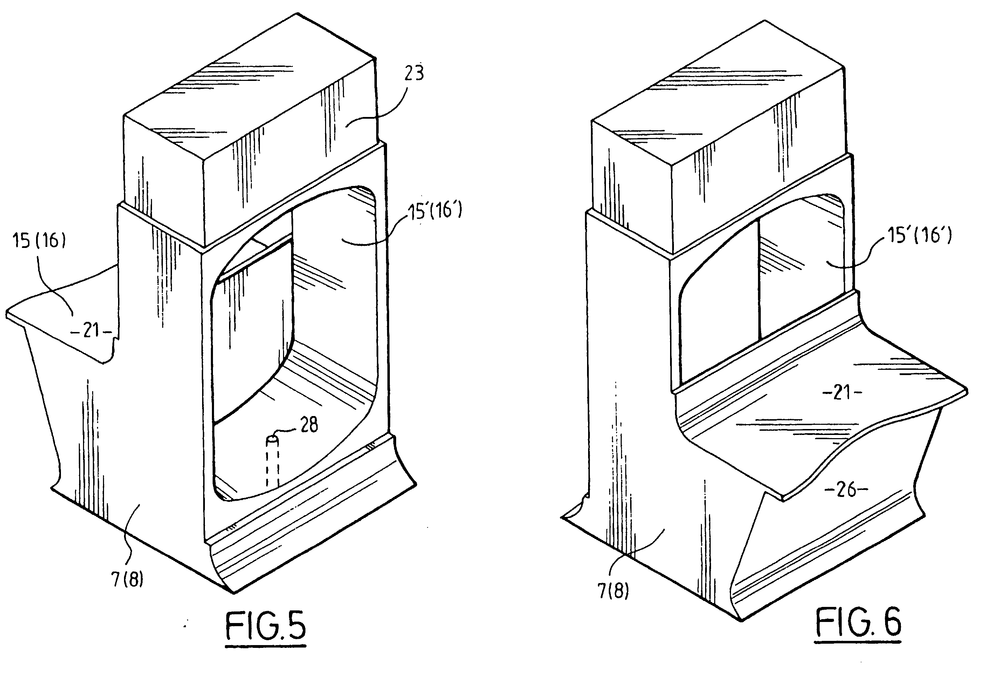

Sur les figures 5 et 6, on a représenté une borne telle que la borne 7 ou 8 d'un module tel que le module 12 qui est réalisé sous une forme permettant d'obtenir à la fois de très bonnes conditions d'hygiène et d'ergonomie du travail du personnel affecté à la préparation des produits.

Les équipements 15 ou 16 de la borne 7 ou 8 comportent en particulier un plan de travail 21 dont la conception est parfaitement ergonomique pour faciliter le travail du personnel dans la zone de travail. La partie de la borne située en-dessous du plan de travail 21 est fermée par une paroi inclinée en acier inoxydable 26 permettant de limiter les surfaces à nettoyer à l'intérieur de la zone de travail et de fermer l'espace renfermant les réseaux de distribution, par exemple le câblage électrique et les conduites d'eau.

Le raccordement des parois verticales des bornes avec le plan de travail et des parois inclinées 26 avec le sol est réalisé par l'intermédiaire d'une zone de raccordement courbe qui peut être constituée par un profilé ou une paroi revêtu de PVC ou une pièce en PVC.

De manière générale, les parois délimitant les zones de travail ou de distribution, soit vers le haut, telles que les plafonds 22 et 22', soit vers l'avant ou l'arrière dans le sens de la circulation des produits, telles que les parois des bornes 7, 8 et 10, se raccordent entre elles et avec le sol de l'installation suivant des surfaces courbes, de manière à éviter la présence de tout angle gênant pour des opérations de nettoyage des zones de travail et de distribution.

La partie supérieure 23 de la borne 7 ou 8 constitue un caisson technique qui peut renfermer un évaporateur, une turbine centrifugeuse et les moyens d'éclairage du plan de travail à l'intérieur de la zone de travail. Le caisson technique est alimenté par les réseaux par l'intérieur de la borne et comporte une trappe d'accès pour l'entretien et les réparations.

En particulier, la borne 7 comporte, dans sa partie supérieure, des moyens d'introduction d'air frais dans les zones de travail 5 et 6 adjacentes et la borne 8 un moyen d'extraction d'air dans la zone de transformation 6.

Le sas de stockage et de passage 15' (ou 16') présente des parois facilement nettoyables en acier inoxydable qui se raccordent sans angle droit, de préférence par des surfaces courbes.

La paroi supérieure du sas est réalisée sous la forme d'une voûte et la paroi inférieure sous la forme d'une cuvette comportant une vidange 28 en un point bas.

La forme de l'espace de stockage du sas est réalisée de manière à obtenir une température la plus homogène possible à l'intérieur du sas, cette température pouvant être la température ordinaire, une basse température maintenue par des éléments de réfrigération disposés à l'intérieur de la borne au contact des parois du sas ou encore une température supérieure à la température ambiante ordinaire maintenue par des éléments de chauffage.

Certaines parois d'accès du sas (ainsi que d'autres parois de l'installation) peuvent être équipées de vitres de manière à permettre une vision constante de l'état des stocks à l'intérieur du sas et également d'obtenir une vision panoptique d'une zone vers une zone voisine.

La paroi inférieure du sas 15' ou 16' qui est courbe et qui comporte les moyens de vidange et d'écoulement 28 à son point le plus bas permet d'éliminer l'eau de condensation des produits stockés dans le sas.

Les parois du sas sont ainsi constamment sèches.

En outre, les sas sont ventilés de manière à obtenir une conservation saine à l'abri de l'humidité des produits stockés.

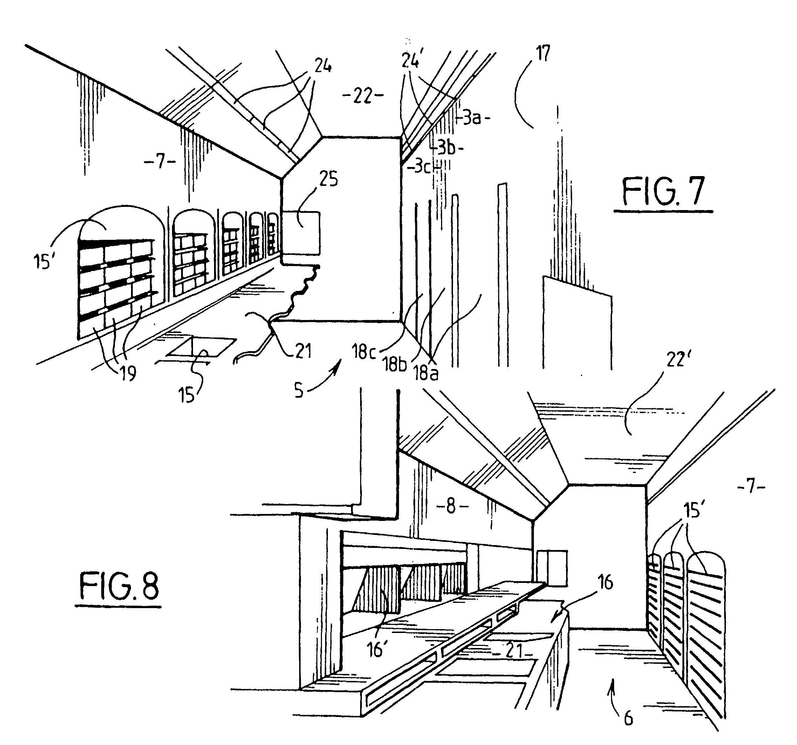

Sur les figures 7, 8 et 9, on a représenté respectivement la zone de pré-préparation 5, la zone de transformation 6 et la zone de distribution 4 d'une cuisine suivant l'invention.

La zone de pré-préparation 5 est délimitée sur un côté de direction transversale par rapport à la direction longitudinale de circulation des produits, par la paroi verticale 17 délimitant l'espace de stockage préliminaire 3 qui est lui-même constitué de compartiments de stockage successifs 3a, 3b, 3c, ..., fermés par un élément de la paroi 17. Chacun des éléments de la paroi 17 est percé d'une ouverture fermée par une porte 18a, 18b, 18c, ..., d'accès au compartiment de stockage initial par l'intérieur de la zone de pré-préparation 5.

La zone de pré-préparation 5 est délimitée sur un côté opposé à la paroi 17 de la zone de stockage initial, par la borne 7 définissant un plan de travail 21 et comportant des équipements tels que 15, par exemple pour le lavage des produits bruts.

La borne 7 définit, pour chacun des modules de la cuisine, un poste de travail du plan de travail 21 et un sas de stockage et de passage 15' des produits fragilisés et lavés contenus dans des récipients 19.

La zone de pré-préparation 5 comporte un plafond 22 constitué par une tôle en acier inoxydable joignant la partie supérieure de la paroi 17 de l'espace de stockage 3 à la partie supérieure d'une paroi frontale verticale de la borne 7.

Sur une partie inclinée vers le plan de travail 21, le plafond 22 de la zone 5 comporte des moyens d'éclairage diffus 24 du plan de travail 21. D'autres moyens d'éclairage d'ambiance 24' peuvent être disposés à la partie supérieure de la paroi 17 de l'espace de stockage initial 3 pour assurer un éclairage de l'ensemble de la zone de travail sans ombre portée.

La zone de travail 5 est réalisée sous la forme d'un couloir ou d'un tunnel à section constante de direction transversale pouvant comporter à ses extrémités des ouvertures d'accès 25.

Les sas 15 des modules successifs sont ventilés et éventuellement réfrigérés.

Sur la figure 8, on a représenté la zone de transformation des produits de la cuisine professionnelle selon l'invention, la structure et la forme générale de la zone 6 étant sensiblement analogues à la forme générale de la zone de pré-préparation 5 qui a été décrite en regard de la figure 7.

En particulier, la zone 6 présente la forme d'un tunnel allongé à section constante comportant des moyens d'éclairage diffus et des moyens de ventilation.

La zone de transformation 6 est délimitée sur un côté par la borne 7 la séparant de la zone de pré-préparation 5 qui a été décrite précédemment. Sur sa paroi verticale dirigée vers la zone de transformation 6, la paroi verticale de la borne 7 comporte des ouvertures d'accès à chacun des sas 15' de stockage et de passage des produits fragilisés et lavés de la zone de pré-préparation 5 à la zone de transformation 6. La zone de transformation 6 est délimitée, sur son côté opposé à la borne 7, par la borne 8 comportant un plan de travail 21 des équipements 16 tels que des fours de cuisson d'un type quelconque dans chacun des modules adjacents de la cuisine et un sas de stockage et de passage 16' dans chacun des modules, pour recevoir les produits transformés et découpés sous forme de parts consommables.

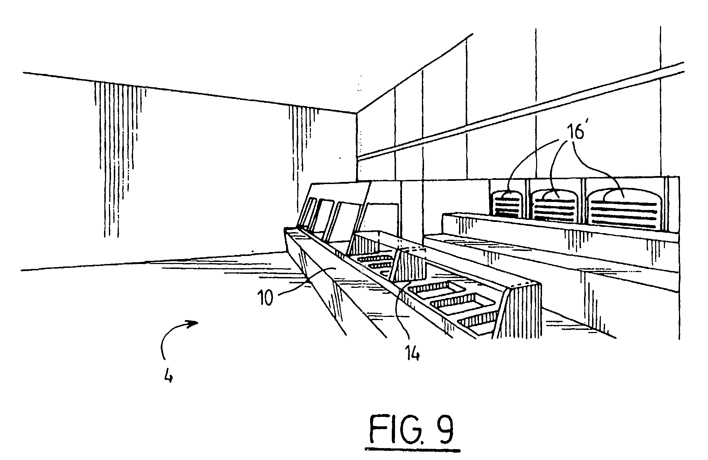

Sur la figure 9, on a représenté la zone de distribution 4 qui comporte des présentoirs 14 adaptés à chacun des produits parvenant à l'extrémité du module correspondant, par l'intermédiaire d'un sas de stockage et de passage 16' dans lequel le personnel chargé de la distribution prélève les produits contenus dans des récipients de présentation.

Les présentoirs 14 sont de types différents suivant les produits et suivant les conditions de conservation des produits avant leur consommation. Sur leur face opposée à la face dirigée vers la paroi verticale comportant les ouvertures d'accès au sas 16', les présentoirs 14 constituant la borne 10 sont accessibles pour la récupération des produits dans leur état consommable par des serveurs ou éventuellement la clientèle de l'espace de restauration, dans le cas d'un libre service.

Le personnel chargé de la distribution des produits dans les présentoirs 14 intervient dans l'espace situé entre la paroi verticale comportant les ouvertures des sas 16' et la face arrière des présentoirs.

Dans tous les cas, les postes de travail dans les zones de travail ou dans la zone de distribution sont parfaitement ergonomiques et évitent tout effort ou déplacement superflu du personnel.

En outre, la cuisine suivant l'invention met en oeuvre obligatoirement le principe de la marche en avant des produits dans un seul sens et sans recoupement possible. La disposition des produits dans les sas de stockage et de passage entre les zones est organisée de telle manière qu'on respecte le principe du produit premier entré premier sorti, ce qui permet de limiter et de contrôler le temps de séjour des produits dans les sas de stockage et donc la fraîcheur de ces produits.

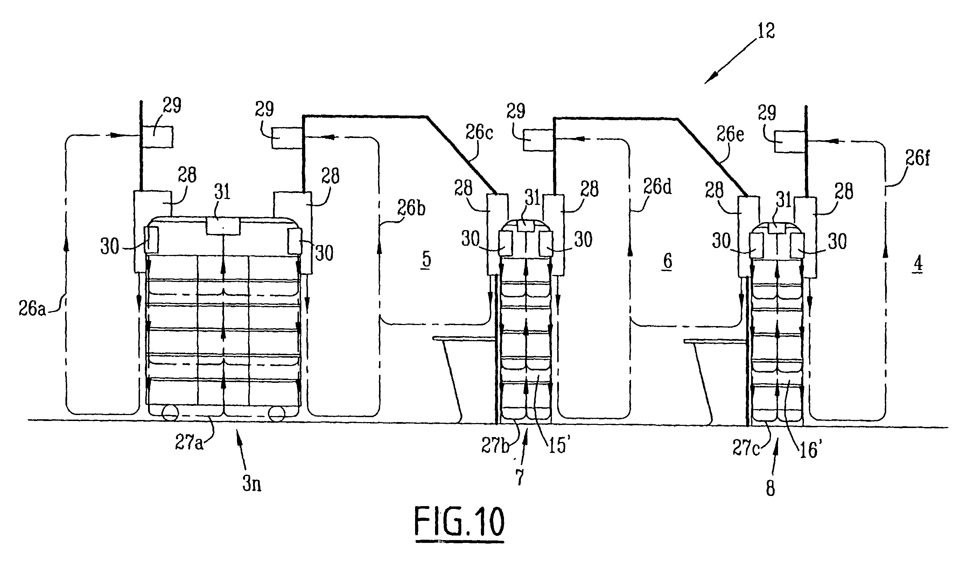

Sur la figure 10, on a représenté un module 12 pour la préparation d'un produit alimentaire. Le module 12 réalisé comme décrit précédemment comporte un compartiment de stockage initial 3n, une première borne 7 et une seconde borne 8. Les bornes 7 et 8 comportent des sas respectifs de stockage et de passage de produits 15' et 16'. Entre le compartiment 3n et la première borne 7 est placée une première zone de travail 5, par exemple de fragilisation et de lavage des produits et entre la première borne 7 et la seconde borne 8 une seconde zone de travail, par exemple de cuisson et de découpage.

Selon la variante de réalisation représentée à la figure 10, des moyens de ventilation et d'aspiration 28, 29, 30, 31 prévus dans chacune des zones de travail 5 et 6, dans la zone de distribution 4 et à l'intérieur du compartiment 3n et des sas 15' et 16' des bornes 7 et 8 permettent d'établir des circulations d'air à température ambiante ou conditionné entre 12°C et 20°C ou d'air réfrigéré qui ont été représentées par des flèches et des lignes fermées sur la figure 10. Une circulation d'air à température ambiante ou conditionné entre 12°C et 20°C est assurée par soufflage d'air de haut en bas par des moyens de soufflage 28 suivant chacune des faces du compartiment 3n, de la borne 7 et de la borne 8 dirigées vers une zone de travail, la zone de distribution ou une zone d'approvisionnement initiale et par aspiration par des moyens d'aspiration 29 en partie haute des différentes zones successives. On établit ainsi des circulations d'air en boucle fermée 26a, 26b, 26c, 26d, 26e et 26f assurant la formation d'un rideau d'air d'isolation suivant les ouvertures du compartiment de stockage 3n et des bornes 7 et 8 et une bonne ventilation des zones de travail.

De plus, des circulations d'air réfrigéré à une température adaptée à la conservation des produits sont réalisées à l'intérieur du compartiment 3n et des sas 15' et 16' des bornes 7 et 8 par des moyens de soufflage et d'aspiration d'air réfrigéré 30, 31.

Chacune des circulations correspondantes désignées par les repères 27a, 27b et 27c sur la figure 10 est réalisée par soufflage d'air réfrigéré de haut en bas suivant les faces ouvertes vers les zones adjacentes, du compartiment 3n et des sas15' et 16' et par aspiration de l'air réfrigéré en partie haute et dans une zone médiane du compartiment ou de la borne considérée. Sur chacune des faces du compartiment de stockage et des sas ouvertes en direction des zones adjacentes sont donc effectués un soufflage d'air à température ambiante ou conditionné entre 12°C et 20°C sous forme d'un rideau disposé vers l'extérieur du compartiment du sas et un soufflage d'air réfrigéré sous forme d'un rideau disposé vers l'intérieur, les flux d'air correspondants étant tangents suivant la face du compartiment ou module.

Les flux d'air à température ambiante ou conditionné entre 12°C et 20°C sont à une pression supérieure à la pression des flux d'air réfrigérés. On évite ainsi toute entrée d'air extérieur dans le compartiment de stockage ou les sas réfrigérés.

Les sas réfrigérés et le compartiment de stockage sont donc isolés de manière parfaitement étanche des zones de travail adjacentes sans qu'il soit nécessaire de prévoir des portes telles que 18 représentée sur la figure 4.

L'invention ne se limite pas strictement au mode de réalisation qui a été décrit.

C'est ainsi qu'une cuisine professionnelle suivant l'invention peut comporter un nombre quelconque de modules suivant la composition du menu servi dans l'espace de restauration et le nombre de repas à servir.

Par exemple, dans le cas d'un espace de restauration dans lequel on sert mille repas, on peut concevoir une cuisine comportant dix modules et dans le cas d'un espace de restauration dans lequel on sert mille cinq cents repas, on peut envisager l'utilisation de douze modules adjacents.

Les modules successifs peuvent être utilisés pour la préparation de plats qui sont différents à la fois quant à la nature des produits et au type de préparation ou encore pour des plats ou des préparations identiques.

La cuisine professionnelle suivant l'invention peut comporter plus de deux zones de travail disposées en parallèle et isolées les unes des autres.

La cuisine professionnelle suivant l'invention peut être utilisée pour préparer des repas distribués dans un espace de restauration tel qu'une cantine scolaire, un restaurant d'entreprise ou un restaurant ou cafétéria d'une grande surface ou encore des repas livrés à domicile ou des plats cuisinés vendus dans un magasin d'alimentation. La zone de réception des produits finis peut être une zone de distribution comportant des présentoirs, une zone d'expédition ou une zone de stockage telle qu'une chambre froide.

Dans le cas où l'on utilise des doubles flux d'air tangents pour isoler les sas des bornes de modules et le compartiment de stockage initial, comme décrit plus haut en regard de la figure 10, il est possible de réaliser la circulation d'air ambiant ou conditionné, dans une seule ou plusieurs zones de travail ou de distribution et de réaliser la circulation d'air réfrigéré dans un seul ou dans plusieurs sas ou compartiments de stockage.

Dans tous les cas, la conception de la cuisine professionnelle suivant l'invention permet d'obtenir des conditions d'hygiène parfaite dans la préparation des plats servis dans l'espace de restauration.

La cuisine professionnelle suivant l'invention permet de respecter le principe de la "marche en avant" aussi bien pour la circulation des produits que des conditionnements, des différents acteurs intervenant dans la préparation et le stockage des produits et des flux d'air. Une telle marche en avant est caractérisée par une circulation telle, à l'intérieur de la cuisine, qu'aucun circuit de produits bruts ou de conditionnements, d'acteurs ou d'air en contact avec des produits bruts ne puisse recoupe un circuit de produits finis ou d'acteurs ou de conditionnements ou d'air en contact avec des produits finis. Aucune cuisine connue jusqu'ici ne permet de respecter complètement ce principe.

Pour la première fois également, on propose une cuisine comportant des moyens d'éclairage et de ventilation totalement intégrés aux équipements de la cuisine et ne comprenant ni cloisons indépendantes des équipements ni faux plafonds dans la zone de production.

Toutes les surfaces qui nécessitent un nettoyage sont réalisées sous une forme permettant de limiter le dépôt de salissures et d'optimiser les conditions de nettoyage.

L'habillage de la cuisine professionnelle et son intégration à un bâtiment peuvent être réalisés d'une manière quelconque, l'ensemble de la cuisine étant purement fonctionnel et n'influant en aucune manière sur la forme extérieure du bâtiment destiné à renfermer la cuisine et l'espace de restauration. En outre, le faible encombrement au sol et en hauteur de la cuisine professionnelle suivant l'invention permet de l'intégrer sans difficulté dans tout type de bâtiment, dans de très bonnes conditions d'économie.

## Revendications

1. Procédé de préparation de produits alimentaires de plusieurs types, différents quant à leur nature et à leur préparation, et destinés à être distribués sous une forme consommable, consistant à traiter chacun des produits de chacun des types de produit pour le faire passer d'un état brut à un état fini propre à la consommation, **caractérisé par le fait qu'**on fait passer les produits de chacun des types de produit par fractions successives correspondant à un nombre défini de parts distribuables, suivant au moins un parcours traversant au moins deux zones de travail (5, 6) et allant d'un espace de stockage (3) de produits bruts à une zone de stockage et distribution (4) de produits finis sous forme consommable, les zones de travail (5, 6) et de stockage et distribution de produits finis (4) étant disposées en parallèle et totalement séparées les unes des autres par des moyens de stockage et de passage (3, 7, 8, 10) isolés des produits d'une zone à une zone voisine et des moyens d'accès isolés (1b, 1'b, 13) pour le personnel affecté à chacune des zones (4, 5, 6), les parcours des produits à travers les moyens de stockage et de passage étant sensiblement parallèles et sans recoupement et étant effectués dans un seul sens.

2. Procédé suivant la revendication 1, **caractérisé par le fait qu'**on fait passer les produits, successivement, dans une zone de fragilisation (5) dans laquelle les produits subissent au moins l'une des opérations suivantes : déballage, épluchage, lavage, et dans une zone de transformation (6) dans laquelle les produits provenant de la zone de fragilisation (5) subissent au moins l'une des opérations suivantes : cuisson, réchauffage, découpage, les moyens de stockage et de passage isolés (7, 8) séparant la zone de fragilisation (5) de la zone de transformation (6) et la zone de transformation (6) de la zone de stockage et distribution (4) comportant des équipements (15, 16, 21) de traitement des produits.

3. Procédé suivant la revendication 2, **caractérisé par le fait qu'**on réalise une ventilation de la zone de fragilisation (5) et de la zone de transformation (6) de manière à éviter tout passage d'air ou de gaz de la zone de fragilisation (5) vers la zone de transformation (6) et depuis l'espace (3) de stockage de produits bruts et la zone de réception (4) vers l'une quelconque des zones de travail (5, 6), par effet de rideau d'air et de surpression.

4. Procédé suivant la revendication 3, **caractérisé par le fait qu'**on réalise une circulation d'air à température ambiante ou conditionné entre 12°C et 20°C (26a, 26b, 26c, 26d, 26e, 26f) dans au moins une des zones de travail (5, 6) ou de distribution (4) par soufflage d'air à température ambiante ou conditionné entre 12°C et 20°C de haut en bas, suivant des faces verticales ouvertes d'au moins un moyen de stockage et de passage isolé des produits (3, 7, 8) dirigées vers une zone de travail ou de distribution adjacente et par aspiration d'air en partie haute de la zone de travail ou de distribution,
et une circulation d'air réfrigéré (27a, 27b, 27c) à l'intérieur de l'au moins un moyen de stockage et de passage isolé de produits (3, 7, 8) par soufflage d'air réfrigéré de haut en bas, suivant chacune des faces verticales ouvertes du moyen de stockage et de passage isolé des produits (3, 7, 8) dirigées vers une zone de travail ou de distribution adjacente et par aspiration de l'air réfrigéré en partie haute et dans une zone médiane du moyen de stockage et de passage isolé, de manière à former un flux d'air à température ambiante suivant les faces ouvertes vers les zones adjacentes disposé vers l'extérieur du moyen de stockage et de passage isolé et un flux d'air réfrigéré tangent au flux d'air ambiant et disposé vers l'intérieur du moyen de stockage et de passage correspondant, la pression de l'air des circulations d'air à température ambiante ou conditionné entre 12°C et 20°C étant supérieure à la pression de l'air des circulations d'air réfrigéré.

5. Procédé suivant l'une quelconque des revendications 1 à 4, **caractérisé par le fait que** la circulation des produits bruts et des produits finis, de conditionnements de ces produits bruts et finis, d'acteurs affectés aux zones de travail (5, 6), à l'espace (3) de stockage de produits bruts et à l'espace (4) de stockage et de distribution et de flux d'air de ventilation, dans l'installation est réalisée de manière que les parcours des produits bruts et des produits finis et des acteurs, conditionnements ou flux d'air en contact avec des produits bruts et avec des produits finis, respectivement, ne puissent se croiser.

6. Installation de préparation de produits alimentaires de plusieurs types différents quant à leur nature et à leur préparation et destinés à être distribués sous forme consommable, consistant à traiter chacun des produits de chacun des types de produit pour le faire passer d'un état brut à un état fini propre à la consommation, **caractérisée par le fait qu'**elle comporte un espace de stockage de produits bruts (3), au moins deux zones de travail (5, 6) et une zone de stockage et distribution de produits finis (4) s'étendant chacune dans une direction sensiblement perpendiculaire à une direction générale (2) de circulation des produits et placées successivement dans la direction de circulation des produits, totalement séparées les unes des autres par des moyens de stockage et de passage (3, 7, 8) des produits entre les zones, réalisés sous forme de sas (15', 16').

7. Installation suivant la revendication 6, **caractérisée par le fait qu'**elle comporte de plus au moins un local (1b) d'habillage, de déshabillage et de nettoyage du personnel affecté aux zones de travail (5, 6), séparé des zones de travail (5, 6) et de distribution (4) par des moyens de traversée isolables tels qu'un sas (1'b).

8. Installation suivant l'une quelconque des revendications 6 et 7, **caractérisée par le fait que** les zones de travail (5, 6) et de réception (4) sont délimitées par des parois (22, 22', 26) raccordées entre elles et avec une surface inférieure de l'installation constituant le sol de l'installation, suivant des surfaces courbes, de manière à éviter toute présence d'angle gênant pour des opérations de nettoyage des zones de travail (5, 6) et de la zone de réception (4).

9. Installation suivant l'une quelconque des revendications 6 à 8, **caractérisée par le fait que** les zones de travail (5, 6) et la zone de distribution (4) de l'installation sont délimitées par des parois en tôle d'acier inoxydable de l'un des types suivants : acier inoxydable austénitique de type 304, 304L, 316, 316L, acier ferritique.

10. Installation suivant la revendication 9, **caractérisée par le fait que** l'acier inoxydable des parois renferme au moins 13 % de chrome, moins de 1 % en poids au total de tantale, niobium et zirconium et moins de 4 % en poids au total de molybdène, de titane, d'aluminium et de cuivre.

11. Installation suivant l'une quelconque des revendications 6 à 10, **caractérisée par le fait que** les zones de travail (5, 6) et la zone de distribution (4) de l'installation sont délimitées par des parois revêtues de PVC ou comportant des parties en PVC

12. Installation suivant l'une quelconque des revendications 6 à 11, **caractérisée par le fait qu'**elle comporte une pluralité de modules s'étendant dans une direction (2) de circulation des produits, juxtaposés dans une direction perpendiculaire à la direction de circulation (2) des produits comportant chacun, successivement dans la direction de circulation des produits, un compartiment (3, 3a, 3b, 3c, ..., 3n) de stockage de produits bruts, une première paroi supérieure (22) d'une première zone de travail (5), une première borne (7) de séparation de la première zone de travail (5) d'une seconde zone de travail (6), une seconde paroi supérieure (22') de la seconde zone de travail (6), une seconde borne (8) de séparation de la seconde zone de travail (6) d'une zone de distribution (4) et une troisième borne (10), les première et seconde bornes (7, 8) comportant des moyens de stockage et de passage (15', 16') des produits et des équipements (15, 16) de traitement des produits et la troisième borne (10) des présentoirs (14) de distribution des produits à l'état consommable, les première et seconde bornes (7, 8) accolées dans une direction transversale perpendiculaire à la direction de circulation (2) des produits constituant, avec les parois supérieures (22, 22'), les seuls éléments de délimitation de la première et de la seconde zones de travail (5, 6).

13. Installation suivant la revendication 12, **caractérisée par le fait que** les équipements (15, 16) de la première et de la seconde bornes (7, 8) de la première et de la seconde zones de travail (5, 6) sont alimentés par des réseaux, depuis un espace intérieur des compartiments de stockage (3, ..., 3n) de la première, de la seconde et de la troisième bornes (7, 8, 10).

14. Installation suivant l'une quelconque des revendications 6 à 13, **caractérisée par le fait que** chacune des zones de travail (5, 6) présente la forme d'un tunnel comportant des moyens de ventilation pour faire circuler de l'air de ventilation, d'abord dans une direction verticale de haut en bas contre une première face d'un moyen de stockage et de passage (3, 7, 8) des produits, puis dans une direction verticale et de bas en haut contre une seconde face d'un moyen de stockage et de passage (3, 7, 8) des produits à l'opposé de la première face dans une direction longitudinale, de manière à éviter des passages d'air ou de gaz entre une première zone de travail (5) et une seconde zone de travail (6).

15. Installation suivant l'une quelconque des revendications 6 à 14, **caractérisée par le fait que** les moyens de stockage et de passage (3, 7, 8) des produits entre une première zone de travail (5) et une seconde zone de travail (6) et à la sortie de la seconde zone de travail (6) comportent chacun un sas délimité par une paroi supérieure en forme de voûte et une paroi inférieure en forme de cuvette comportant une vidange (28) en un point bas.

16. Installation suivant l'une quelconque des revendications 6 à 15, **caractérisée par le fait que** chacune des zones de travail (5, 6) comporte des moyens d'éclairage diffus (24, 24') sans ombre portée sur un plan de travail (21) des équipements (15, 16) de la première et de la seconde zones de travail (5, 6).

17. Installation suivant l'une quelconque des revendications 6 à 16, **caractérisée par le fait qu'**elle comporte des éléments d'éclairage et de ventilation (23, 24, 24', 27, 27') totalement intégrés à des équipements des zones de travail (5, 6), de l'espace de stockage (3) de produits bruts et de la zone de stockage et de distribution (4) de produits finis.

18. Installation suivant l'une quelconque des revendications 6 à 7, **caractérisée par le fait que** les zones de travail (5, 6), l'espace (3) de stockage de produits bruts et l'espace (4) de stockage et de distribution de produits finis sont délimités par des parois constituées uniquement par des parties d'équipements de l'installation.

19. Installation suivant la revendication 18, **caractérisée par le fait que** les parois sont réalisées de manière à limiter l'accrochage de salissures et à faciliter leur nettoyage.

20. Installation suivant l'une quelconque des revendications 6 à 19, **caractérisée par le fait qu'**elle comporte, dans au moins une des zones de travail (5, 6) et de distribution (4) des moyens de soufflage (28) d'air à température ambiante ou conditionné entre 12°C et 20°C de haut en bas suivant des faces d'au moins un moyen de stockage et de passage (3, 7, 8) dirigées vers les zones de travail (5, 6) et de distribution (4) adjacentes et des moyens d'aspiration d'air (29) en partie haute et, dans l'au moins un moyen de stockage et de passage de produits (3, 7, 8) des moyens de soufflage d'air réfrigéré (30) de haut en bas suivant des faces du moyen de stockage et de passage (3, 7, 8) dirigées vers les zones de travail (5, 6) et de distribution (4) adjacentes et des moyens d'aspiration (31) d'air réfrigéré en partie haute et dans une zone médiane du moyen de stockage et de distribution.

## Patentansprüche

1. Verfahren zur Herstellung von Nahrungsmittelprodukten mehrerer Typen, die bezüglich ihrer Natur und ihrer Herstellung verschieden sind und dazu bestimmt sind, in einer verzehrbaren Form verteilt zu werden, bestehend aus dem Behandeln eines jeden Produkts eines jeden Produkttyps, um es vom Rohzustand in einen zum Verzehr geeigneten fertigen Zustand übergehen zu lassen, **dadurch gekennzeichnet, daß** man die Produkte eines jeden Produkttyps aufeinanderfolgende Schritte durchlaufen läßt, die einer definierten Anzahl verteilbarer Teile entsprechen, wobei sie wenigstens einem Weg folgen, der mindestens zwei Arbeitszonen (5, 6) durchquert und von einem Lagerraum (3) für Rohprodukte zu einer Lager- und Verteilungszone (4) für fertige Produkte in verzehrbarer Form führt, wobei die Arbeitszonen (5, 6) und Lager- und Verteilungszone (4) für fertige Produkte parallel angeordnet sind nd durch Lager- und Führungsmittel (3, 7, 8, 10), die von den Produkten benachbarter Zonen isoliert sind, und isolierte Zugangsmittel (1b, 1b', 13) für das beteiligte Personal in jeder Zone (4, 5, 6) voneinander völlig getrennt sind und der Weg der Produkte durch die Lager- und Führungsmittel im wesentlichen parallel und ohne Überschneidung ist und in einer Richtung ausgeführt wird.

2. Verfahren gemäß Anspruch 1, **dadurch gekennzeichnet, daß** man die Produkte nacheinander in eine Vorbereitungszone (5), in der die Produkte wenigstens einem der folgenden Arbeitsvorgänge unterzogen werden: Auspacken, Schälen oder Waschen, und in eine Umwandlungszone (6) führt, in der die aus der Vorbereitungszone (5) kommenden Produkte wenigstens einem der folgenden Arbeitsvorgänge unterzogen werden: Kochen, Erwärmen oder Schneiden, wobei die isolierten Lager- und Führungsmittel (7, 8), die die Vorbereitungszone (5) von der Umwandlungszone (6) und die Umwandlungszone (6) von der Lagerund Verteilungszone (4) trennen, Einrichtungen (15, 16, 21) zur Behandlung der Produkte umfassen.

3. Verfahren gemäß Anspruch 2, **dadurch gekennzeichnet, daß** man eine Belüftung der Vorbereitungszone (5) und der Umwandlungszone (6) in der Weise ausführt, daß man alle Luft- oder Gasströmung von der Vorbereitungszone (5) zur Umwandlungszone (6) und von dem Lagerraum (3) der Rohprodukte und der Aufnahmezone (4) zu einer der Arbeitszonen (5, 6) mittels eines Luftvorhangs und Überdruck verhindert.

4. Verfahren gemäß Anspruch 3, **dadurch gekennzeichnet, daß** man in mindestens einer der Arbeitszonen (5, 6) oder Verteilungszone (4) eine Umwälzung (26a, 26b, 26c, 26d, 26e, 26f) von Luft mit Raumtemperatur oder mit zwischen 12 und 20°C durch Einblasen von, Luft mit Raumtemperatur oder mit zwischen 12°C und 20°C von oben nach unten entlang den senkrechten, offenen Flächen mindestens eines isolierten Lager- und Führungsmittel (3, 7, 8) für Produkte, die auf eine angrenzende Arbeits- oder Verteilungszone gerichtet sind, und durch Absaugen von Luft in einem oberen Teil der Arbeits- oder Verteilungszone und eine Umwälzung (27a, 27b, 27c) gekühlter Luft im Inneren mindestens eines isolierten Lager- und Führungsmittels (3, 7, 8) für Produkte durch Einblasen von gekühlter Luft von oben nach unten entlang jeder offenen senkrechten Seite des isolierten Lager- und Führungsmittels (3, 7, 8) für Produkte, die auf eine angrenzende Arbeits- und Verbindungszone gerichtet sind, und durch Absaugen von gekühlter Luft in einem oberen Teil und in einer mittleren Zone des isolierten Lagerund Verteilungsmittels ausführt, um so einen Luftstrom mit Raumtemperatur entlang den offenen Flächen, die zu dem Äußeren hin des isolierten Lager- und Führungsmittels angeordnet sind, und einen Luftstrom gekühlter Luft zu bilden, der den Luftstrom mit Raumtemperatur berührt und zum Inneren des entsprechenden Lager- und Führungsmittels angeordnet ist, wobei der Luftdruck der Umwälzung von Luft mit Raumtemperatur oder mit zwischen 12°C und 20°C über dem Luftdruck der Umwälzung gekühlte Luft liegt.

5. Verfahren gemäß einem der Ansprüche 1 bis 4, **dadurch gekennzeichnet, daß** der Kreislauf der Rohprodukte und der fertigen Produkte, der Verpackung dieser rohen und fertigen Produkte, der beteiligten Personen in den Arbeitszonen (5, 6), dem Lagerraum (3) der Rohprodukte und dem Raum (4) zur Lagerung und Verteilung und des Lüftungsluftstroms bei der Anlage so ausgeführt wird, daß sich der Weg der Rohprodukte und der fertigen Produkte und der Personen, Verpackungen beziehungsweise des Luftstroms im Kontakt mit Rohprodukten beziehungsweise mit fertigen Produkten nicht kreuzen kann.

6. Anlage zur Herstellung von Nahrungsmittelprodukten mehrerer Typen, die bezüglich ihrer Natur und ihrer Herstellung verschieden sind und dazu bestimmt sind, in einer verzehrbaren Form verteilt zu werden, bestehend aus dem Behandeln eines jeden Produkts eines jeden Produkttyps, um es vom Rohzustand in einen zum Verzehr geeigneten fertigen Zustand übergehen zu lassen, **dadurch gekennzeichnet, daß** sie einen Lagerraum (3) für rohe Produkte, mindestens zwei Arbeitszonen (5, 6) und eine Zone (4) zur Lagerung und Verteilung fertiger Produkte umfaßt, wobei sich jede in einer im wesentlichen senkrechten Richtung zu einer allgemeinen Richtung (2) des Umlaufs der Produkte erstreckt und nacheinander in Richtung des Umlaufs der Produkte angeordnet ist und durch Lager- und Führungsmittel (3, 7, 8) für die Produkte zwischen den Zonen vollständig voneinander getrennt ist, die in Form einer Luftschleuse (15', 16') ausgeführt sind.

7. Anlage gemäß Anspruch 6, **dadurch gekennzeichnet, daß** sie außerdem mindestens einen Ort (1b) zum Ankleiden, Auskleiden und Reinigen der beteiligten Personen in den Arbeitszonen (5, 6) umfaßt, der durch Mittel zum isolierten Durchgang wie etwa eine Luftschleuse (1'b) von den Arbeitszonen (5, 6) und der Verteilungszone (4) getrennt ist.

8. Anlage gemäß einem der Ansprüche 6 und 7, **dadurch gekennzeichnet, daß** die Arbeitszonen (5, 6) und die Eingangszone (4) durch untereinander verbundene Wände (22, 22', 26) mit einer unteren Aufstellfläche, die den Anlageboden bildet, abgegrenzt sind, wobei sie gekrümmten Oberflächen so folgen, daß jegliche Anwesenheit eines Reinigungsvorgänge bei den Arbeitszonen (5, 6) und der Eingangszone (4) störenden Winkels vermieden wird.

9. Anlage gemäß einem der Ansprüche 6 bis 8, **dadurch gekennzeichnet, daß** die Arbeitszonen (5, 6) und die Verteilungszone (4) der Anlage durch Wände aus Edelstahlblech eines der folgenden Typen abgegrenzt sind: austenitischer Edelstahl des Typs 304, 304L, 316, 316L, ferritischer Stahl.

10. Anlage gemäß Anspruch 9, **dadurch gekennzeichnet, daß** der Edelstahl der Wände mindestens 13% Chrom, weniger als 1 Gew.-% Tantal, Niobium und Zirkonium zusammen und weniger als 4 Gew.-% Molybdän, Titan, Aluminium und Kupfer zusammen einschließt.

11. Anlage gemäß einem der Ansprüche 6 bis 10, dadurch gekennzeich net, daß die Arbeitszonen (5, 6) und die Verteilungszone (4) der Anlage durch PVCbeschichtete oder Teile aus PVC umfassende Wände abgegrenzt sind.

12. Anlage gemäß einem der Ansprüche 6 bis 11, dadurch gekennzeich net, daß sie eine Mehrzahl von Moduln umfaßt, die sich in einer Richtung (2) des Umlaufs der Produkte erstrecken, die in einer zu der Umlaufrichtung (2) der Produkte senkrechten Richtung nebeneinander liegen, die jeweils nacheinander in Umlaufrichtung (2) der Produkte ein Lagerabteil (3, 3a, 3b, 3c, ..., 3n) für Rohprodukte, eine erste obere Wand (22) einer ersten Arbeitszone (5), eine erste Abtrennung (7) der ersten Arbeitszone (5) von einer zweiten Arbeitszone (6), eine zweite obere Wand (22') einer zweiten Arbeitszone (6), eine zweite Abtrennung (8) der zweiten Arbeitszone (6) von einer Verteilungszone (4) und eine dritte Abtrennung (10) umfassen, wobei die erste und zweite Abtrennung (7, 8) Lagerund Führungsmittel (15', 16') für die Produkte und die Einrichtungen (15, 16) zur Behandlung der Produkte und die dritte Abtrennung (10) Schaukästen (14) zur Verteilung der Produkte im verzehrbaren Zustand umfaßt, wobei sich die erste und zweite Abtrennung (7, 8) in senkrechter Richtung quer zur Umlaufrichtung (2) der Produkte anschließt und die oberen Wände (22, 22') die einzigen Elemente zur Abgrenzung der ersten und zweiten Arbeitszone (5, 6) sind.

13. Anlage gemäß Anspruch 12, **dadurch gekennzeichnet, daß** die Einrichtungen (15, 16) der ersten und der zweiten Abtrennung (7, 8) der ersten und der zweiten Arbeitszone (5, 6) über Netze von einem Innenraum der Lagerabteile (3, ..., 3n) zur ersten, zweiten und dritten Abtrennung (7, 8, 10) versorgt werden.

14. Anlage gemäß einem der Ansprüche 6 bis 13, **dadurch gekennzeichnet, daß** jede Arbeitszone (5, 6) die Form eines Tunnels aufweist, der Belüftungsmittel umfaßt, um Belüftungsluft umlaufen zu lassen, zunächst in senkrechter Richtung von oben nach unten gegen eine erste Fläche eines Lager- und Führungsmittels (3, 7, 8) für die Produkte, dann in einer senkrechten Richtung von unten nach oben gegen eine zweite Fläche eines Lager- und Führungsmittels (3, 7, 8) für die Produkte im Gegensatz zu der ersten Fläche in Längsrichtung, um den Durchgang von Luft oder von Gas zwischen einer ersten Arbeitszone (5) und einer zweiten Arbeitszone (6) zu verhindern.

15. Anlage gemäß einem der Ansprüche 6 bis 14, **dadurch gekennzeichnet, daß** die Lager- und Führungsmittels (3, 7, 8) für die Produkte zwischen einer ersten Arbeitszone (5) und einer zweiten Arbeitszone (6) und am Ausgang der zweiten Arbeitszone (6) jeweils eine Luftschleuse umfassen, die durch eine oberen Wand in Form einer Wölbung und eine untere Wand in Form eines Beckens, das einem tiefen Punkt einen Ablaß (28) umfaßt, begrenzt wird.

16. Anlage gemäß einem der Ansprüche 6 bis 15, **dadurch gekennzeichnet, daß** jede Arbeitszone (5, 6) Mittel (24, 24') zur diffusen Beleuchtung einer Arbeitsfläche (21) mit Einrichtungen (15, 16) der ersten und der zweiten Arbeitszone (5, 6) ohne Schatten umfassen.

17. Anlage gemäß einem der Ansprüche 6 bis 16, **dadurch gekennzeichnet, daß** sie Elemente (23, 24, 24', 27, 27') zur Beleuchtung und Belüftung umfaßt, die in Einrichtungen der Arbeitszonen (5, 6), des Lagerraums (3) für Rohprodukte und der Lager- und Verteilungszone (4) für fertige Produkte vollständig integriert sind.

18. Anlage gemäß einem der Ansprüche 6 bis 7, **dadurch gekennzeichnet, daß** die Arbeitszonen (5, 6), der Lagerraum (3) für Rohprodukte und der Raum (4) zur Lagerung und Verteilung fertiger Produkte durch Wände abgegrenzt sind, die einzig aus Einrichtungsteilen der Anlage bestehen.

19. Anlage gemäß Anspruch 18, **dadurch gekennzeichnet, daß** die Wände so ausgeführt sind, daß sie die Verschmutzung begrenzen und ihre Reinigung erleichtern.

20. Anlage gemäß einem der Ansprüche 6 bis 19, **dadurch gekennzeichnet, daß** sie in mindestens einer Arbeitszone (5, 6) und Verteilungszone (4) Mittel (28) zum Einblasen von Luft mit Raumtemperatur oder mit 12°C und 20°C von oben nach unten entlang den Flächen mindestens eines Lager- und Führungsmittels (3, 7, 8), die gegen die angrenzenden Arbeitszonen (5, 6) und Verteilungszone (4) gerichtet sind, und Luftabsaugmittel (29) im oberen Teil und in dem wenigstens einen Lager- und Führungsmittel (3, 7, 8) für die Produkte Mittel (30) zum Einblasen gekühlter Luft von oben nach unten entlang der Flächen der Lager- und Führungsmittel (3, 7, 8), die gegen die angrenzenden Arbeitszonen (5, 6) und Verteilungszone (4) gerichtet sind, und Absaugmittel (31) für gekühlte Luft im oberen Teil und in einer mittleren Zone des Lager- und Verteilungsmittels umfaßt.

## Claims

1. Process for preparing various types of food products which differ in their nature and preparation and which are intended to be distributed in a consumable form, comprising treating each of the products of each type of product in order to change it from a raw state to a finished state suitable for consumption, **characterised in that** the products of each type of product are passed, in successive fractions corresponding to a defined number of distributable parts, along at least one pathway passing through at least two working zones (5, 6) and going from a storage space (3) for raw products to a storage and distribution zone (4) for finished products in consumable form, the working zones (5, 6) and storage and distribution zones for the finished products (4) being arranged in parallel and totally separated from one another by isolated storage and passage means (3, 7, 8, 10) for the products from one zone to an adjacent zone and isolated access means (1b, 1'b, 13) for the staff assigned to each of the zones (4, 5, 6), the pathways for the products through the storage and passage means being substantially parallel and non-intersecting and running in only one direction.

2. Process according to claim 1, **characterised in that** the products are passed successively into a delicate handling zone (5) in which the products undergo at least one of the following operations: unpacking, peeling, washing, and into a transformation zone (6) in which the products coming from the delicate handling zone (5) undergo at least one of the following operations: cooking, heating, cutting up, the isolated storage and passage means (7, 8) separating the delicate handling zone (5) from the transformation zone (6) and the transformation zone (6) from the storage and distribution zone (4) comprising equipment (15, 16, 21) for treating the products.

3. Process according to claim 2, **characterised in that** the delicate handling zone (5) and transformation zone (6) are ventilated to avoid any passage of air or gas from the delicate handling zone (5) to the transformation zone (6) and from the storage space (3) for raw products and the reception zone (4) to any one of the working zones (5, 6) by the effect of an air curtain and excess pressure.

4. Process according to claim 3, **characterised in that** air is circulated at ambient temperature or conditioned to between 12°C and 20°C (26a, 26b, 26c, 26d, 26e, 26f) in at least one of the working zones (5, 6) or distribution zones (4) by blowing air at ambient temperature or conditioned to between 12°C and 20°C from top to bottom, along open vertical surfaces of at least one isolated storage and passage means for the products (3, 7, 8) directed towards a working zone or adjacent distribution zone and by aspirating air at the top of the working zone or distribution zone,
and cooled air (27a, 27b, 27c) is circulated inside at least one isolated storage and passage means for products (3, 7, 8) by blowing chilled air downwards, along each of the open vertical surfaces of the isolated storage and passage means for the products (3, 7, 8) directed towards a working zone or adjacent distribution zone and by aspirating chilled air at the top and in a median zone of the isolated storage and passage means, so as to form an airflow at ambient temperature along the open sides towards the adjacent zones located towards the outside of the isolated storage and passage means and a flow of chilled air at a tangent to the flow of ambient air and disposed towards the interior of the corresponding storage and passage means, the air pressure of the air circulating at ambient temperature or conditioned at between 12°C and 20°C being greater than the air pressure of the circulating chilled air.

5. Process according to any one of claims 1 to 4, **characterised in that** the circulation of the raw products and finished products, the packagings for these raw and finished products, the workers assigned to the working zones (5, 6) to the storage space (3) for raw products and to the storage and distribution space (4) and ventilating airflow in the installation is set up so that the pathways for the raw products and finished products and for the workers, packaging or airflows in contact with the raw products and with the finished products, respectively, cannot cross.

6. Installation for preparing food products of a number of different types with respect to their nature and preparation, which are intended to be distributed in a consumable form, comprising treating each of the products of each type of product in order to change it from a raw state to a finished state ready for consumption, **characterised in that** it comprises a storage space for raw products (3), at least two working zones (5, 6) and a storage and distribution zone for finished products (4), each extending in a direction substantially perpendicular to a general direction (2) of circulation of the products and placed successively in the direction of circulation of the products, which are totally separated from one another by the storage and passage means (3, 7, 8) for the products between the zones, constructed in the form of air locks (15', 16').

7. Installation according to claim 6, **characterised in that** it further comprises at least one station (1b) for dressing, undressing and cleaning of the staff assigned to the working zones (5, 6), this station being separated from the working zones (5, 6) and distribution zone (4) by isolatable entry means such as an air lock (1'b).

8. Installation according to any one of claims 6 and 7, **characterised in that** the working zones (5, 6) and reception zone (4) are bounded by walls (22, 22', 26) connected to one another and to a lower surface of the installation constituting the floor of the installation, along curved surfaces so as to avoid the presence of any angles which would interfere with the cleaning operations of the working zones (5, 6) and reception zone (4).

9. Installation according to one of claims 6 to 8, **characterised in that** the working zones (5, 6) and the distribution zone (4) of the installation are bounded by walls of stainless steel sheet of one of the following types: austenitic stainless steel of type 304, 304L, 316, 316L or ferritic steel.

10. Installation according to claim 9, **characterised in that** the stainless steel of the walls contains at least 13% chromium, less than 1% by weight of the total of tantalum, niobium and zirconium and less than 4% by weight of the total of molybdenum, titanium, aluminium and copper.

11. Installation according to any one of claims 6 to 10, **characterised in that** the working zones (5, 6) and the distribution zone (4) of the installation are bounded by walls coated with PVC or comprising PVC sections.

12. Installation according to any one of claims 6 to 11, **characterised in that** it comprises a plurality of modules extending in one direction (2) of circulation of the products, juxtaposed in a direction perpendicular to the direction of circulation (2) of the products each comprising, in succession in the direction of circulation of the products, a compartment (3, 3a, 3b, 3c ..., 3n) for storage of raw products, a first upper wall (22) of a first working zone (5), a first barrier (7) for separating the first working zone (5) from a second working zone (6), a second upper wall (22') of the second working zone (6), a second barrier (8) for separating the second working zone (6) from a distribution zone (4) and a third barrier (10), the first and second barriers (7, 8) comprising storage and passage means (15', 16') for the products and for the equipment (15, 16) for treating the products and the third barrier (10) comprising stands (14) for the distribution of the products in the consumable state, the first and second barriers (7, 8) adjacent in a transverse direction perpendicular to the direction of circulation (2) of the products which, with the upper walls (22, 22'), constitute the only elements bounding the first and second working zones (5,6).

13. Installation according to claim 12, **characterised in that** the equipment (15, 16) of the first and second barriers (7, 8) of the first and second working zones (5, 6) are supplied by networks, from an inner space of the storage compartments (3, ..., 3n) of the first, second and third barriers (7, 8, 10).

14. Installation according to any one of claims 6 to 13 **characterised in that** each of the working zones (5, 6) is in the form of a tunnel comprising ventilating means for circulating ventilating air, first in a vertical direction downwards against a first surface of a storage and passage means (3, 7, 8) for the products, then in a vertical direction upwards towards a second surface of a storage and passage means (3, 7, 8) for the products opposite the first surface in a longitudinal direction, so as to prevent the passage of air or gas between a first working zone (5) and a second working zone (6).

15. Installation according to any one of claims 6 to 14, **characterised in that** the storage and passage means (3, 7, 8) for the products between a first working zone (5) and a second working zone (6) and at the exit from the second working zone (6) each comprise an air lock bounded by an upper wall in the form of a vault and a lower wall in the form of a dish comprising a drain (28) at its lowest point.

16. Installation according to anyone of claim 6 to 15, **characterised in that** each of the working zones (5, 6) comprises diffuse lighting means (24, 24') with no shadow cast over a working area (21) of the equipment (15, 16) of the first and second working zones (5, 6).

17. Installation according to any one of claims 6 to 16, **characterised in that** it comprises lighting and ventilation elements (23, 24, 24', 27, 27') totally integrated with equipment in the working zones (5, 6), the storage space (3) for raw products and the storage and distribution zone (4) for the finished products.

18. Installation according to any one of claims 6 to 7, **characterised in that** the working zones (5, 6) the storage space (3) for raw products and the storage and distribution space (4) for finished products are bounded by walls consisting solely of parts of the equipment of the installation.

19. Installation according to claim 18, **characterised in that** the walls are formed so as to restrict the adhesion of dirt and to make them easier to clean.

20. Installation according to any one of claims 6 to 19, **characterised in that** it comprises, in at least one of the working zones (5, 6) and distribution zone (4), means (28) for blowing air at ambient temperature or conditioned to between 12°C and 20°C downwards along the surfaces of at least one storage and passage means (3, 7, 8) directed towards the adjacent working zones (5, 6) and distribution zone (4) and means for aspirating air (29) at the top and, in at least one means for storing and passing products (3, 7, 8), means for blowing chilled air (30) downwards along the surfaces of the storage and passage means (3, 7, 8) directed towards the adjacent working zones (5, 6) and distribution zone (4) and means for aspirating chilled air (31) at the top and in a median zone of the storage and distribution means.
